Europäisches Patentamt

**European Patent Office**

**Office européen des brevets**

(19)

(11) Veröffentlichungsnummer: **0 081 798**
A2

(12) # EUROPÄISCHE PATENTANMELDUNG

(21) Anmeldenummer: **82111330.5**

(22) Anmeldetag: **07.12.82**

(51) Int. Cl.³: **A 23 L  1/30,** A 23 L  1/212

---

(30) Priorität: **10.12.81  DE 3148810**

(43) Veröffentlichungstag der Anmeldung: **22.06.83**
**Patentblatt 83/25**

(84) Benannte Vertragsstaaten: **AT BE CH DE FR GB IT LI NL SE**

(71) Anmelder: **Gerster, Franz, Saulgauer Strasse 19, D-7950 Biberach (DE)**
Anmelder: **Gerster, Bruno, Steigstrasse 5, D-7957 Schemmerhofen 1 (DE)**

(72) Erfinder: **Gerster, Franz, Saulgauer Strasse 19, D-7950 Biberach (DE)**
Erfinder: **Gerster, Bruno, Steigstrasse 5, D-7957 Schemmerhofen 1 (DE)**

(74) Vertreter: **Braito, Herbert, Dipl.-Ing., Postfach 1140 Martin-Luther-Strasse 1, D-7950 Biberach 1 (DE)**

---

(54) **Verfahren zur Herstellung kalorienarmer Lebensmittel.**

(57) Ein kalorienarmes Lebensmittel ist aus genießbarem landwirtschaftlichem Fruchtgut, insbesondere Obst, Beeren, Gemüse und dgl. gewonnen, seine Trockenmasse besteht überwiegend aus mit Pektin durchsetzten unverdaulichen Stoffen wie Zellulose, deren Anteil an der Trockenmasse ca. 70–88% betragen kann. Zur Gewinnung dieses Lebensmittels wird der Trester aus dem Fruchtgut durch Herauslösen der Kalorienträger aus der festen Phase mittels Extraktion mit einem Lösungsmittel gewonnen, wobei der Trester soweit der Extraktion ausgesetzt wird, bis er annähernd kalorienfrei ist. Anschließend oder später wird der Trester durch Zugabe von Geschmacks- und Aromastoffen zu einem Lebensmittel verarbeitet, das sich im übrigen von einem vergleichbaren nährwertreichen Lebensmittel kaum unterscheidet. Man kann Geschmacks- und Aromastoffe des Ausgangsfruchtgutes, aber auch eines artfremden Fruchtgutes zugeben und das Lebensmittel nach Bedarf einstellen.

EP 0 081 798 A2

ACTORUM AG

0081798
3 G 2672

7. Dezember 1982

Franz Gerster, Saulgauer Str. 19, D-7950 Biberach/Riß
Bruno Gerster, Steigstr. 5, D-7957 Schemmerhofen 1

Verfahren zur Herstellung
kalorienarmer Lebensmittel

Die Erfindung betrifft ein Verfahren zur Herstellung kalorienarmer Lebensmittel aus genießbarem landwirtschaftlichen Fruchtgut, insbesondere Obst, Beeren und Gemüse, durch Herauslösen der Kalorienträger aus der festen Phase mittels Extraktion mit einem Lösungsmittel, wobei der Trester so weit der Extraktion ausgesetzt wird, bis er annähernd kalorienfrei ist.

Unter dem Begriff "Fruchtgut" sollen hier alle der Ernährung dienenden Agrargüter verstanden werden, beispielsweise auch Kartoffeln, Rüben, Blatt- und Halmgut.

Bei der Erzeugung kalorienarmer Lebensmittel hat man sich zunächst auf die Auslese konzentriert und Verfahren zum weitgehenden Entzug der Kalorienträger entwickelt, was in aller Regel durch Extraktion geschieht. Es ist auch bekannt, nährwertarme Extraktions-Produkte einem anderen Lebensmittel zuzusetzen, um dessen mittleren Nährwertgehalt zu mindern. Den gleichen Zweck verfolgt man mit nährwertarmen Quellstoffen, die zudem durch Volumenvergrößerung eine schnellere Sättigung ermöglichen.

So wird nach der DE-OS 30 09 210 das Fruchtgut zerkleinert und durch Auspressen entsaftet, der Preßrückstand getrocknet und gemahlen und in einem oder mehreren Extraktionsvorgängen einem alkoholhaltigen Lösungsmittel ausgesetzt, woraufhin die Festsubstanz getrocknet und vermahlen wird.

Diese Festsubstanz, die dann im wesentlichen aus leeren Pflanzenzellen, also Zellulose mit Pektin, besteht, wird später einer kleineren Menge eines natürlichen Lebensmittels zugesetzt, das wiederum die Form eines Extraktes haben kann. Auf diese Weise wird ein diesem natürlichen Lebensmittel vergleichbares Produkt erhalten, das entsprechend den Mengenverhältnissen einen kleineren Heizwert hat.

Einmal ist aber bei dem letztgeschilderten Verfahren der Heizwert maßgeblich durch die im Naturzustand eingesetzten Lebensmittel vorgegeben. Dieses Verfahren, bei dem Geschmacks- und Aromastoffe durchweg verlorengehen, führt zu einem Lebensmittel, das maßgeblich durch die Art des letztlich eingesetzten Naturproduktes bestimmt ist.

Die Erfindung geht aus von dem eingangs geschilderten Verfahren und verfolgt die Aufgabe, kalorienarme Lebensmittel mit ungewöhnlich niedrigem Nährwertgehalt relativ einfach so herzustellen, daß unterschiedliche, etwa auf bestimmte Naturprodukte abgestimmte Lebensmittel erhalten werden.

Zur Lösung dieser Aufgabe wird der überwiegend durch Zellulose und Pektin gebildete Extraktions-Rückstand mit gesonderten Zugabestoffen wie Geschmacks- und Aromastoffen versetzt.

Das bei dem erfindungsgemäßen Verfahren hergestellte Lebensmittel kann in verschiedenem Zustand, beispielsweise trocken, fest, breiig oder flüssig eingestellt werden, je nachdem, welche Füll- oder Zugabestoffe zum Einsatz kommen, wobei diese Zugabestoffe ggf. ebenso kalorienarm sein sollten wie das eigentliche, aus dem Ausgangs-Fruchtgut gewonnene Lebensmittel. Mit Pektin durchsetzte unverdauliche Stoffe wie Zellulose lassen sich aus praktisch allem für die Verwertung in Betracht kommenden Fruchtgut mit verhältnismäßig hohem Reinheitsgrad gewinnen und dann ohne wesentliche Änderung des restlichen Kaloriengehaltes und ohne sonderlichen Aufwand zu einem Lebensmittel verarbeiten, das beim Verzehr keinen wesentlich anderen Eindruck macht als das vergleichbare Original-Lebensmittel. Da sich niemand ausschließlich von einem einzigen Lebensmittel ernährt und jedermann zwischenzeitig nährwertreichere Lebens- bzw. Genußmittel zu sich nimmt, kann selbst bei vorwiegendem Verzehr solcher nährwertarmen Lebensmittel die benötigte Menge an Nährstoffen, Mineralien, Vitamine und dgl. zugeführt werden. Die wasserunlöslichen Vitamine bleiben ohnehin in der Trockenmasse des Fruchtgutes, ebenso ein großer Anteil an Mineralien, Spurenelemente und dgl.. Andere für die Ernährung wichtige Bestandteile können aber nach Bedarf zugegeben werden.

Da man beliebige Zugabestoffe mit frei wählbarem Anteil einsetzen kann, ist es leicht möglich, auf der Basis des gleichen Extraktions-Rückstandes Geschmack und Duft des Endproduktes in außerordentlich variationsreicher Weise einzustellen.

Besondere Bedeutung kommt dabei der Säuerung der Extraktionsrückstände zu, insbesondere werden Süßstoff und Genußsäure zugesetzt, während der Saft des ausgepreßten Fruchtgutes einer gesonderten Verarbeitung bzw. Verwertung zugeführt wird. Für die Lagerung ist es sehr bedeutsam , wenn schon unmittelbar nach der Extraktion angesäuert wird, da sich durch eine Senkung des ph-Wertes die Sterilisationstemperatur ebenfalls erniedrigt. Dies verhindert, daß die Zellstruktur des Fruchtgutes aufgelöst wird. Zudem wird die Gefahr einer Bräunung durch Maillart-Reaktion vermindert. Dabei kann auch schon Vitamin C beigefügt werden, um einer Oxydation mit Luftsäurestoff entgegenzuwirken.

Als zweckmäßig hat es sich auch hier erwiesen, den Trester nach der Extraktion zu trocknen. Er kann dann, ebenso wie die Zugabestoffe, bis zur Zubereitung kurz vor Gebrauch getrennt gelagert werden. Im Prinzip können die Extraktions-Rückstände zusammen mit den gewählten Zugabestoffen ausgetrocknet und gelagert werden. Die getrennte Lagerung hat jedoch den Vorteil, daß die Reaktionen zwischen den einzelnen Stoffen verhindert werden, die sonst zu nicht kontrollierbaren Veränderungen führen würden.

Wenigstens ein Teil der dem Trester zugegebenen Aromastoffe sollte aus dem Ausgangsprodukt, insbesondere dessen flüssiger Phase, gewonnen werden, um eine Rückeinstellung des Lebensmittels auf den Ausgangs-Charakter zu ermöglichen. Grundsätzlich läßt sich das Lebensmittel vollständig aus einem einzigen Ausgangs-Fruchtgut gewinnen. Beispielsweise läßt sich so ein als Apfelmus eingestelltes Fruchtmus erzeugen, das sich dann kaum von einem vergleichbaren kalorienreichen Fruchtmus unterscheiden läßt. Die Musform hat auch den Vorteil, daß bei dem hohen Feuchtigkeitsgehalt das erhaltene Pektin eine Quellwirkung und damit eine Volumenvergrößerung bewirkt, was eine schnelle Sättigung ermöglicht.

Es ist allerdings auch ohne weiteres möglich, auf der Basis des gewonnenen Tresters durch Zugabe artfremder Aromastoffe, evtl. Farbstoffe und Geschmacksstoffe, ein Produkt zu schaffen, das nichts mehr mit dem Ausgangs-Fruchtgut gemeinsam hat bzw. auf ein gänzlich anderes Gut hinweist. Beispielsweise läßt sich so eine Fruchtcreme gewinnen, die nach Bedarf auf einen Himbeer-, Orangen- oder dgl. -Charakter eingestellt ist.

Zur Aromagewinnung läßt sich eine geringe Menge von ca. 10% bis 20% der flüssigen Phase des Fruchtgutes bei etwa 70°C verdampfen und durch fraktionierte Destillation konzentrieren. Das Aromakonzentrat umfaßt dann ca. 1% des Saftes.

Anhand einiger Beispiele soll die Erfindung nun näher erläutert werden:

Beispiel 1

Reife Äpfel wurden verlesen, gewaschen und mit Wellenschnitt zu Scheiben geschnitzelt. Die Größe der Schnitzel hängt vom Reifegrad der Äpfel ab. Je reifer die Äpfel, um so größer die Schnitzel.

Die Schnitzel wurden dann kontinuierlich gewogen und durch warmen Extrakt (Miscella) aus der laufenden Produktion vorgewärmt. Anschließend wurden sie in einem Perkolator bei 50 bis 65° C so lange der Extraktion mit warmem Wasser ausgesetzt, bis 90% des wasserlöslichen Extraktes gelöst und extrahiert war. Auf 100 kg Äpfel wurden 105,6 l Wasser zugegeben, wobei aus dem Ausgangs-Fruchtgut Miscella und Trester mit nachstehenden Gewichtsmengen erhalten wurden:

| Tabelle 1 | Äpfel kg | Miscella/Saft kg | Trester kg |
|---|---|---|---|
| Menge | 100,00 | 131,30 | 79,74 |
| Wasser | 85,40 | 121,76 | 74,11 |
| lösliche Trockensubstanz | 10,60 | 9,54 | 1,06 |
| unlösl. Trockensubstanz | 4,00 | | 4,00 |

Das Gemisch aus Saft und Miscella wurde anschließend soweit erwärmt, bis etwa 10% des Saftes verdampft waren. Die gewonnenen Brüden wurden dann in einer Rektifizierkolonne verstärkt, in einem Kühler abgekühlt, wobei ca. 90% Kondensat in der Rektifizierkolonne wieder zurückgeführt wurden, während die restlichen 10%, d.h. etwa 1% des Saftes gesondert abgezogen und als Aromakonzentrat verwendet wurden.

Der entaromatisierte Saft wurde z.T. als Apfelsaftkonzentrat und z.T. zu Apfelwein verarbeitet.

Der Trester wurde zur Abtrennung von Schale, Kerngehäuse und restlicher Stengel zweistufig in einer Passiermaschine durchpassiert. Das so erhaltene Trester-Apfelmus wurde je nach seiner Konsistenz noch soweit mit Wasser versetzt, daß es nach Umrühren in einem 1-1 Gefäß und nach folgendem Ausschütten auf eine flache Unterlage nach zwei Minuten flach verläuft. Es hatte eine helle Farbe und machte einen appetitlichen Eindruck, war aber weitgehend geschmacksfrei, hatte keine Süße, keine Säure und verströmte keinen Duft.

Zugegeben wurden dann auf 100 kg Apfelmus:
45 g Sacharin-Süßstoff
500 g Apfel-Aroma, 200-fach verstärkt
425 g Zitronensäure.

Das so schließlich erhaltene nährstoffarme Apfelmus unterschied sich praktisch in keinerlei Hinsicht von einem auf herkömmliche Weise hergestellten Apfelmus mit 16,5% Zuckergehalt, war auch gleichgut verdaubar. Während 1 kg handels-

- 7 -

0081798

übliches Apfelmus einen Heizwert von 672 kcal bzw. 2860 kJ hat, wurde hier ein Nährwert von 65,75 kcal bzw. 270,50 KJ festgestellt.

Beispiel 2

Die gewaschenen und verlesenen Äpfel wurden gemahlen, und dann wurden durch Abpressen Fest- und Flüssigphase getrennt. Der die Flüssigphase bildende Saft wurde in der gleichen Weise behandelt, wie dies für das Gemisch Saft/Miscella im Beispiel 1 beschrieben ist, insbesondere wurde Aroma-Konzentrat aus dem Saft gewonnen.

Den abgetrennten Feststoffen (Apfeltrester) wurden in einem Perkolator 68,5 1 Wasser je 100 kg Äpfel als Extraktionsmittel zugegeben.

Der Extrakt (Miscella) wurde gesondert in der gleichen Weise behandelt, wie dies im Beispiel 1 angegeben ist, er kann aber auch dem Saft zugegeben und mit diesem gemeinsam behandelt werden.

Für 100 kg Äfpel ergaben sich bei dieser Behandlung die nachstehenden Mengenwerte:

| Tabelle 2 | Äpfel kg | Preßsaft kg | gepreßter Trester kg | extrakt.Saft kg | Extrakt Trester kg |
|---|---|---|---|---|---|
| Menge | 100,00 | 75,40 | 24,60 | 19,8 | 48,70 |
| Wasser | 84,48 | 66,00 | 18,48 | 18,36 | 43,62 |
| lösl. Trockensubst. | 11,52 | 9,00 | 2,52 | 1,64 | 0,88 |
| unlösl.Trockensubst. | 4,00 | | 4,00 | | 4,00 |

Der Trester wurde dann 2-fach passiert, und das so erhaltene Trester-Apfelmus zeigte das gleiche Erscheinungsbild wie nach Beispiel 1. Dieses kalorienarme Mus wurde jedoch bis unter einen Feuchtigkeitsgehalt von 10% getrocknet, gemahlen und getrennt vom Aromakonzentrat und anderen Zugaben auf Lager genommen.

Später wurde eine Probe Trester-Konzentrat mit einer solchen Menge kaltem Wasser gemischt, daß sich die gleichen Verlauferscheinungen wie nach Beispiel 1 ergaben. Daraufhin wurden Süßstoff, Aromakonzentrat und Zitronensäure in den schon genannten Verhältnissen zugegeben.

Das auf diese Weise gewonnene Apfelmus hatte zwar ein etwas geringeres Wasserbindungsvermögen als das nach Beispiel 1 gewonnene Mus, ließ aber im übrigen keinerlei Unterschiede zu dem gemäß dem anderen Verfahren hergestellten Mus erkennen.

Durch die separate Lagerung von Aromakonzentrat und Trester wird verhindert, daß das Aroma zwischenzeitig durch im Trester oder im Mus enthaltene Oxydasen abgebaut wird. Geschmack und Duft von frischen Äpfeln werden auf diese Weise besser erhalten.

Die Extraktion kann nach Wahl mit kaltem oder warmem Wasser, ggf. auch mit einer anderen Extraktionsflüssigkeit durchgeführt werden. Zur weiteren Denaturierung des Zellaufbaus bei Fruchtgut mit sehr fester Zellstruktur kann es auch erforderlich sein, die extrahierten Feststoffe des Fruchtgutes bis über 65° C zu erhitzen.

Vorteilhaft ist der hohe Pektingehalt reiner Apfeltrester, da Pektin bei Zugabe von Wasser vor allem zu dem vorher getrockneten Gut stark aufquillt, wirkt sich dies ernährungsphysiologisch positiv aus, da man durch das vergrößerte Volumen früher gesättigt wird und mit der geringeren Nahrungsmenge auch weniger Kalorien zu sich nimmt.

Das passierte Mus kann je nach Anwendungsfall in trockenem wie in pastösem bzw. nassem Zustand zu kleineren Bestandteilen gemahlen werden. Dadurch ist es für eine Vielzahl von Produkten einsetzbar. So läßt sich das Mus z.B. feinstvermahlenen trüben Limonaden zusetzen, wie sie etwa aus Orangenkonzentrat hergestellt werden. Dadurch erreicht man eine höhere Farbintensität. Besonders vorteilhaft ist jedoch wiederum der hohe Pektingehalt, der die Viskosität der Limonade erhöht und dadurch dem Getränk mehr Körper vermittelt.

Beispiel 3

Schwarze Johannisbeeren wurden auf einem Glieder-Transportband mit Wasser abgesprüht und anschließend in einer Quetschmühle gemahlen. Dann wurde die Maische mittels einer Exzenterschneckenpumpe durch einen Röhrenerhitzer gepumpt, auf ca. 70°C erwärmt und anschließend abgepreßt, woraufhin der Trester der Extraktion unterworfen wurde. Bei einer Wasserzugabe von 25 Litern ergaben sich dabei die in der folgenden Tabelle festgehaltenen Mengenwerte:

| Tabelle 3 | Beeren kg | Preßsaft kg | gepreßter Trester kg | extrahierter Saft kg | Extrakt-Trester kg |
|---|---|---|---|---|---|
| Menge | 100,00 | 81,20 | 18,80 | 18,40 | 25,40 |
| Wasser | 83,60 | 72,10 | 10,50 | 16,90 | 18,60 |
| lösl. Trockensubstanz | 10,80 | 9,10 | 1,70 | 1,50 | 0,20 |
| unlösl. Trockensubst. | 6,60 | | 6,60 | | 6,60 |

Daraufhin wurde der Trester passiert, durch Erhitzen pasteurisiert und steril gelagert.

Der gewonnene Saft wurde auf ca. 100° C erhitzt und zu etwa 20% abgedampft. Die gewonnenen Brüden wurden in der geschilderten Weise einer fraktionellen Destillation bis zur Gewinnung von Aromakonzentrat unterworfen.

Bei der Zubereitung wurden je 100 kg Trester folgende Stoffe zugegeben:

                    45 g Sacharin
                    425 g Zitronensäure

300 g Johannisbeer-Aroma
28 g Pektin und Lebensmittelfarbstoff nach Sicht.

Nach dem Durchmischen der verschiedenen Bestandteile ergab sich eine nahezu kalorienfreie Marmelade, deren Erscheinungsbild kaum von dem der herkömmlichen Johannisbeermarmelade abwich. Gegenüber einer herkömmlichen Konfitüre aus schwarzen Johannisbeeren mit 60% löslicher Trockensubstanz und 2440 Kcal bzw. 10370 KJ je kg war hier der Heizwert auf 45 Kcal bzw. 192 KJ gesenkt.

- 11 -

0081798

7. Dezember 1982
3 G 2672

Franz Gerster, Saulgauer Str. 19, D-7950 Biberach/Riß
Bruno Gerster, Steigstr. 5, D-7957 Schemmerhofen 1

Verfahren zur Herstellung kalorienarmer Lebensmittel

Ansprüche

1. Verfahren zur Herstellung kalorienarmer Lebensmittel aus genießbarem landwirtschaftlichen Fruchtgut, insbesondere Obst, Beeren und Gemüse, durch Herauslösen der Kalorienträger aus der festen Phase mittels Extraktion mit einem Lösungsmittel, wobei der Trester so weit der Extraktion ausgesetzt wird, bis er annähernd kalorienfrei ist, dadurch gekennzeichnet, daß der überwiegend durch Zelulose und Pektin gebildete Extraktionsrückstand mit gesonderten Zugabestoffen wie Geschmacks- und Aromastoffen versetzt wird.

2. Verfahren nach Anspruch 1, dadurch gekennzeichnet, daß die Extraktionsrückstände angesäuert werden.

3. Verfahren nach Anspruch 2, dadurch gekennzeichnet, daß als Geschmacksstoffe Süßstoff und Genußsäure zugesetzt werden.

4. Verfahren nach einem der Ansprüche 1 bis 3, dadurch gekennzeichnet, daß der Trester nach der Extraktion getrocknet wird.

5. Verfahren nach einem der Ansprüche 1 bis 4, dadurch gekennzeichnet, daß Trester und Zugabestoffe bis zur Zubereitung kurz vor Gebrauch getrennt gelagert werden.

6. Verfahren nach einem der Ansprüche 1 bis 5, dadurch gekennzeichnet, daß wenigstens ein Teil der dem Trester zuzugebenden Aromastoffe aus dem gleichen Ausgangsprodukt, insbesondere dessen flüssiger Phase gewonnen wird.

7. Verfahren nach Anspruch 6, dadurch gekennzeichnet, daß eine geringe Menge von ca. 100 % der flüssigen Phase des Fruchtgutes verdampft und durch fraktionierte Destillation konzentriert wird.